# DEMANDE DE BREVET EUROPEEN

(11) **EP 0 524 121 A1**
(43) Date de publication de la demande: **20.01.1993**
(21) Numéro de dépôt: 92450010.1
(22) Date de dépôt: 16.07.1992
(51) Int. Cl.: H02G 1/12

(54) **Dispositif de dénudage de la surface d'un conducteur récouvert d'une isolant de protectrice**

(30) Priorité: 19.07.1991 FR 9109398
(71) Demandeur: AEROSPATIALE Société Nationale Industrielle, F-75781 Paris Cédex 16 (FR)
(72) Inventeur: Pradin, Louis, F-33160 Saint Aubin de Médoc (FR)
(74) Mandataire: Thébault, Jean-Louis

(57) **Abrégé**

- L'invention concerne un dispositif de dénudage de la surface d'un élément (3,20) en matériau conducteur de l'électricité recouvert d'un élément protecteur (4,21) ou isolant tel qu'une pellicule, gaine ou analogue, comprenant un organe d'incision (5b) en un matériau conducteur de l'électricité, des moyens (11 à 15) d'application et déplacement dudit organe d'incision (5b) sur ledit élément protecteur et/ou isolant (4,21), caractérisé en ce qu'il comporte, en outre, un organe de détection (5a) en un matériau conducteur de l'électricité, lesdits organes d'incision (5b) et de détection (5a) étant disposés côte à côte et à faible distance l'un de l'autre tout en étant isolés électriquement l'un de l'autre et déplacés simultanément par lesdits moyens (11 à 15) d'application et déplacement desdits organes (5a,5b) sur ledit élément protecteur et/ou isolant, ledit organe de détection (5a) étant, à cet effet, conformé en organe d'incision et des moyens (D) pour appliquer auxdits organes (5a,5b) une différence de potentiel électrique et détecter une continuité électrique établie par micro-contact entre les deux organes susdits.
- Application notamment au dénudage de câbles.

## Description

La présente invention a trait à un dispositif permettant l'enlèvement d'une couche, en particulier protectrice et/ou isolante, recouvrant la surface d'un élément en un matériau conducteur de l'électricité.

L'invention s'applique d'une manière générale au dénudage d'un élément ou substrat conducteur de l'électricité, de forme quelconque, recouvert d'un élément relativement mince de protection et/ou isolation, en vue d'accéder audit élément ou substrat conducteur de l'électricité, notamment pour sa liaison électrique à d'autres circuits et s'applique plus particulièrement, et c'est d'ailleurs dans cette application qu'elle sera décrite ci-après, au dénudage de câbles blindés surgainés.

Ces câbles sont constitués d'une pluralité de conducteurs électriques isolés par une gaine latérale. Les conducteurs, placés les uns à côté des autres en faisceau, sont entourés d'un blindage recouvert d'une gaine protectrice et isolante.

Pour pouvoir utiliser ces câbles et les raccorder, il est nécessaire de dénuder leurs extrémités. Cette opération de dénudage consiste essentiellement à enlever, sur une certaine longueur, la gaine protectrice extérieure du câble pour laisser apparaître l'extrémité du blindage.

Il est essentiel, pour des questions de qualité de fiabilité et de sécurité, qu'au cours du dénudage le blindage ne soit pas détérioré, même en surface.

La présente invention vise à garantir une meilleure qualité du dénudage de tels câbles et en particulier une absence de toute atteinte ou détérioration du blindage.

Actuellement, le dénudage des câbles, blindés ou non, s'opère par des procédés manuels (scalpel, pince thermique ou mécanique) ou automatiques, mettant en oeuvre des moyens mécaniques ou thermiques.

La mise en oeuvre de ces différentes techniques connues n'assure pas la garantie totale, aucun auto-contrôle n'étant intégré au processus, que l'âme des fils et/ou le blindage des câbles n'ont subi aucune rupture partielle, aucune atteinte, entaille ou autre détérioration, provoquée par ces procédés.

Dans le cas d'un dénudage manuel, par exemple avec un scalpel, la découpe est liée à la dextérité, incontrôlable, de l'opérateur.

Dans le cas d'un dénudage mécanique et automatique, par exemple par couteaux rotatifs ou couteaux de forme, la découpe est liée au réglage constant de profondeur initialement déterminé par l'opérateur et qui n'évolue pas pendant le dénudage pour prendre en compte les éventuelles variations.

Dans le cas du dénudage thermique on utilise des mors métalliques chauffants qui viennent par empreintes successives carboniser la couche d'isolant. La qualité du résultat dépend de la dextérité, incontrôlable, de l'opérateur, comme pour le scalpel, du fait que les mors peuvent toucher et détériorer l'âme ou le blindage considéré.

De plus, on ne maîtrise pas la température, ni la pression, ni le temps, liés à la variation d'épaisseur et des formes d'isolants ou gaines à dénuder. En outre, ce procédé dégage des vapeurs nocives susceptibles de polluer l'atmosphère. Enfin, les découpes des isolants ne sont pas nettes, ni franches du fait de la carbonisation.

Parmi les procédés automatiques on peut également citer la découpe à l'aide d'un faisceau laser focalisé sur la zone de l'isolant à carboniser. Toutefois, la nécessité de focaliser de manière très précise le faisceau laser sur la partie à attaquer exclut l'utilisation de ce procédé au dénudage de gaines extérieures ne présentant pas de symétrie de révolution comme c'est le cas des câbles blindés surgainés. Ce procédé ne garantit pas par ailleurs une absence de toute atteinte ou détérioration des parties sous-jacentes à la gaine extérieure.

L'invention vise à pallier les inconvénients des techniques connues de dénudage rappelées ci-dessus en proposant un dispositif capable de garantir, grâce à un auto-contrôle en continu, le dénudage de tels câbles en conservant au blindage mis à jour sa totale intégrité.

L'auto-contrôle du dénudage de câbles est connu en lui-même. C'est ainsi, par exemple, que le brevet US N° 4.999.910 décrit des perfectionnements à un appareil de dénudage d'extrémité de câbles électriques de type connu comprenant deux lames de coupe montées en opposition à la manière d'une pince et déplaçables en synchronisme en direction l'une de l'autre, Is perfectionnements apportés par ce brevet consistant, en bref, en l'application à l'ensemble des lames d'un potentiel électrique et la détection d'un transfert de charges électriques entre les lames et le conducteur central du câble lorsque les lames s'approchent suffisamment près dudit conducteur, une telle détection commandant l'arrêt des lames.

Une telle manière de procéder présente cependant des inconvénients substantiels.

Il faut appliquer aux lames une forte tension pour avoir une décharge notable. Dans l'exemple donné dans le brevet US ci-dessus une tension de 300 volts est appliquée aux lames, ce qui oblige à prendre des précautions, en particulier isoler les lames et son système d'entraînement pour éviter que l'opérateur ne reçoive des décharges.

D'autre part, la qualité de la décharge électrique entre lames et conducteur central et plus précisément son intensité, dépend directement de l'état électrique initial du conducteur central, en sorte que l'on n'est jamais vraiment bien sûr que les lames se sont arrêtées à temps, c'est-à-dire qu'elles n'ont pas entamé la surface externe du conducteur central.

Enfin, les charges électriques accumulées sur le conducteur central, après le dénudage, doivent être évacuées afin que le conducteur retrouve un état électrique neutre, ce qui est impératif comme souligné d'ailleurs dans la description (col. 12, lignes 49-57) pour éviter des problèmes dans les circuits électriques dans lesquels seront utilisés les câbles ainsi dénudés et si également l'autre extrémité du même câble doit être dénudée par le même processus.

Il est également à noter que l'appareil décrit dans US 4.999.910 est inopérant pour dénuder des câbles à contours externes non circulaires, du fait du principe de découpe par deux lames en opposition à déplacement simultané synchrone.

L'invention propose un dénudage à auto-contrôle par voie électrique mais exempt des divers inconvénients rappelés ci-dessus et permettant le dénudage notamment de câbles à contours externes circulaires et non-circulaires, tels que les câbles blindés surgainés, de manière totalement fiable et automatique.

A cet effet, l'invention a pour objet un dispositif de dénudage de la surface d'un élément en matériau conducteur de l'électricité recouvert d'un élément protecteur ou isolant tel qu'une pellicule, gaine ou analogue, comprenant un organe d'incision en un matériau conducteur de l'électricité, des moyens d'application et déplacement dudit organe d'incision sur ledit élément protecteur et/ou isolant, caractérisé en ce qu'il comporte, en outre, un organe de détection en un matériau conducteur de l'électricité, lesdits organes d'incision et de détection étant disposés côte à côte et à faible distance l'un de l'autre tout en étant isolés électriquement l'un de l'autre et déplacés simultanément par lesdits moyens d'application et déplacement desdits organes sur ledit élément protecteur et/ou isolant, ledit organe de détection étant, à cet effet, conformé en organe d'incision et des moyens pour appliquer auxdits organes une différence de potentiel électrique et détecter une continuité électrique établie par micro-contact entre les deux organes susdits.

Dans un tel dispositif, l'organe d'incision et l'organe de détection, qui est conformé de façon à réaliser une incision puisque, par obligation, il pénètre dans le matériau protecteur ou isolant en même temps que l'organe d'incision, contactent ce matériau et l'entament dans la même zone et se rapprochent donc dans les mêmes conditions de la surface de l'élément sous-jacent conducteur de l'électricité.

Dès que l'ensemble des deux organes susdits, en se rapprochant dudit élément sous-jacent, est suffisamment proche pour engendrer un micro-contact électrique entre, d'une part, ledit élément conducteur et l'organe de détection et, d'autre part, ledit élément conducteur et l'organe d'incision, un micro-courant électrique s'établit entre les deux organes et est aussitôt détecté en vue de l'arrêt, de préférence instantané et automatique, du dénudage.

Un dénudage effectif est ainsi opéré avec la certitude de l'absence totale d'atteinte ou d'endommagement de l'élément sous-jacent.

De plus, un tel dispositif permet d'inciser en toute sécurité un matériau protecteur ou isolant dont l'épaisseur peut localement varier puisque l'organe d'incision et l'organe de détection associé se déplacent de front en direction sensiblement du même point de l'élément sous-jacent, ce qui permet le dénudage notamment de câbles blindés surgainés.

Par organe d'incision on entend tout moyen propre à créer dans tout ou partie de l'épaisseur de l'élément de recouvrement une solution de continuité avec enlèvement ou non de matière, tel qu'un moyen de coupe ou un moyen de fusion.

Avantageusement, lesdits moyens d'application et déplacement des organes d'incision comportent, en outre, des moyens propres à appliquer les organes d'incision sur ledit élément de recouvrement avec une pression prédéterminée, réglable.

Suivant une application principale de l'invention, l'élément de recouvrement est un élément tubulaire gainant un blindage entourant des conducteurs en nombre, de nature et de configurations quelconques ou une âme conductrice de configuration quelconque.

Dans le cadre de cette application, le dispositif de l'invention est constitué d'un moyen de support commun des deux organes d'incision et de détection, d'un moyen de maintien du câble à dénuder disposé sensiblement en regard des deux organes susdits et de façon à recevoir entre lesdits moyens, de support et de maintien respectivement, ledit câble, d'un bâti portant lesdits moyens dont l'un au moins est monté coulissant en direction de l'autre, de moyens propres à exercer sur le ou chaque moyen monté coulissant, en direction de l'autre, une force constante, réglable, et de moyens propres à effectuer un mouvement relatif de rotation sur au moins un tour entre le câble à dénuder et l'ensemble formé par lesdits moyens de support et de maintien.

De préférence, les deux organes d'incision et de détection sont munis de moyens limitant leur enfoncement dans l'élément de recouvrement du câble et servant de guide lors de la rotation relative entre le câble et lesdits organes.

De préférence, afin de réaliser un auto-contrôle continu du dénudage, les moyens d'application de ladite force constante, réglable, sont reliés auxdits moyens d'application d'une différence de potentiel aux organes d'incision et de détection d'une continuité électrique entre lesdits organes, en sorte de supprimer ou réduire l'application de ladite force en cas de détection d'une continuité électrique par micro-contact.

En prévoyant des moyens de détection d'une continuité électrique par micro-contact particulièrement sensibles et des moyens d'action particulièrement rapides sur les moyens d'application de ladite force, en réponse auxdits moyens de détection, on peut conserver, même avec une détection de défaut de dénudage, à savoir une détection de continuité électrique par micro-contact entre les deux organes d'incision, une qualité tout à fait acceptable.

Bien entendu, le dispositif peut être automatisé de manière complète en prenant en compte les différents paramètres de réglage : profondeur de coupe, pression des organes d'incision et de détection, vitesse de rotation, nombre de tours de découpe, ces divers paramètres étant par exemple programmés initialement pour chaque type de configuration de câbles.

D'autres caractéristiques et avantages ressortiront de la description qui va suivre du principe de l'invention et d'un mode de réalisation appliqué au dénudage de câbles blindés surgainés, description donnée à titre d'exemple uniquement et en regard des dessins annexés sur lesquels :
- Figure 1 est un schéma illustrant l'incision d'une gaine d'un câble blindé suivant le principe de l'invention ;
- Figure 2 est un schéma de principe d'un dispositif selon l'invention appliqué au dénudage de câbles blindés ;
- Figure 3 est une coupe suivant l'axe du câble du dispositif de la figure 2 à hauteur des moyens d'incision ;
- Figure 4 est une coupe transversale d'un câble bi-filaire torsadé sur la gaine duquel est appliqué le dispositif d'incision schématisé sur les figures 1 à 3 ;
- Figure 5 est une vue de face d'un mode de réalisation d'un dispositif à dénuder les câbles blindés selon l'invention ;
- Figure 6 est une vue en coupe suivant la ligne VI-VI du dispositif de la figure 5 ;
- Figure 7 est une vue en coupe suivant la ligne VII-VII du dispositif de la figure 5 ;
- Figure 8 est une vue de dessus et de gauche du dispositif de la figure 5 ;
- Figure 9 est une vue de face de l'ensemble palpeur-lames-porte-lames du dispositif de la figure 5 ;
- Figure 10 est une vue en coupe suivant la ligne X-X du dispositif de la figure 9 ;
- Figure 11 est une vue de dessous du dispositif de la figure 10, et
- Figures 12a à 12e illustrent différentes positions de l'ensemble palpeur-lames-porte-lames par rapport au câble à dénuder.

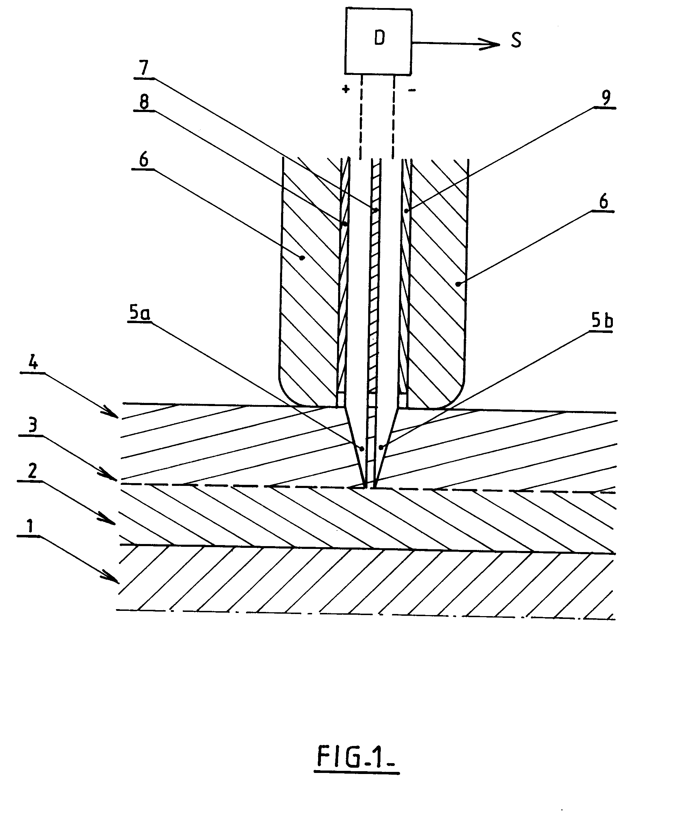

Sur la figure 1 on a représenté schématiquement en demi-coupe axiale un câble cylindrique comprenant successivement à partir du centre, une âme centrale 1 à conducteur unique ou multiple, une gaine isolante interne 2, un blindage métallique 3 et une gaine isolante externe 4.

Le blindage 3 est par exemple une tresse de fils de cuivre étamé et la gaine isolante externe 4 est par exemple en "Téflon" ou en "Kapton".

Conformément à l'invention, la gaine externe 4 est incisée à l'aide d'un dispositif constitué d'un organe de détection 5a associé à un organe d'incision 5b, les deux organes étant disposés côte à côte et à faible distance l'un de l'autre tout en étant isolés.

Les deux organes 5a,5b devant attaquer de front la gaine 4, il est nécessaire de configurer l'organe de détection 5a en organe d'incision et de préférence en organe d'incision identique à l'organe d'incision proprement dit et chargé du dénudage 5b.

A cet effet, les organes 5a,5b ont des arêtes coupantes similaires, parallèles et disposées à une distance constante l'une de l'autre, d'un dixième de millimètre par exemple. Les deux organes 5a,5b sont par exemple des lames minces, de formes et dimensions appropriées, dont les plans sont perpendiculaires à l'axe du câble en position de dénudage et qui sont déplacées simultanément en direction de l'âme centrale 1 afin d'inciser la gaine externe 4 suivant deux incisions parallèles.

Les deux lames 5a,5b sont reliées électriquement à un détecteur D d'une continuité électrique par micro-contact entre les deux lames comprenant des moyens d'application d'une différence de potentiel appropriée aux deux lames 5a,5b et délivrant un signal S au cas où une continuité électrique par micro-contact s'établirait entre les deux lames 5a,5b, via le blindage 3 ou l'éventuelle couche d'oxydation externe de celui-ci, par suite d'une incision trop profonde de la gaine 4.

Sur la figure 1 on a représenté, de part et d'autre de la paire de lames 5a,5b, une pièce 6 dénommée palpeur, à l'extrémité de laquelle les lames dépassent d'une valeur prédéterminée, réglable. L'ensemble palpeur 6-lames 5a,5b est déplacé d'un bloc en direction du câble à dénuder, le palpeur 6 servant de butée limitant l'enfoncement des lames dans la gaine 4 et servant également de guide, comme on le verra plus loin, lors de la rotation relative de l'ensemble palpeur-lames autour du câble suivant une trajectoire perpendiculaire à l'axe de ce dernier.

Des lames ou couches isolantes respectivement 7 et 8-9 sont prévues entre les deux lames 5a,5b, d'une part et entre celles-ci et le palpeur 6, d'autre part.

On décrira plus loin les moyens pour déplacer l'ensemble palpeur 6-lames 5a,5b, d'une part en direction du centre du câble et, d'autre part, autour du câble.

Le signal S est un signal d'information pouvant également, suivant un mode de mise en oeuvre préféré, commander l'éloignement de l'ensemble palpeur 6-lames 5a,5b, du câble et l'arrêt du dénudage.

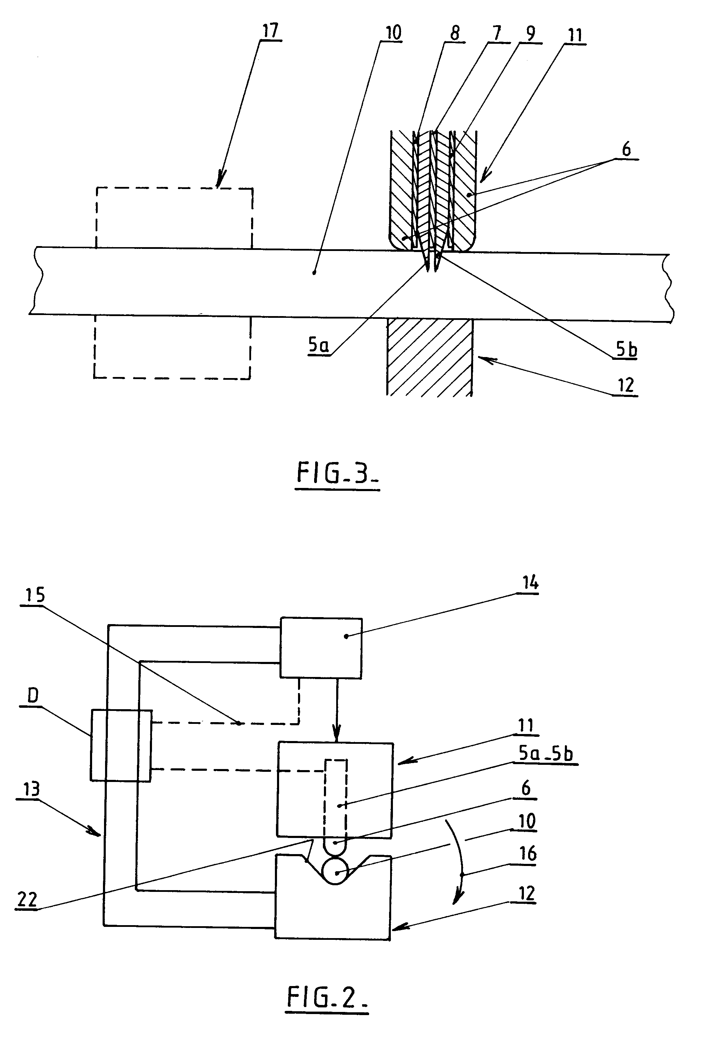

Les figures 2 et 3 illustrent de manière un peu plus précise le principe général d'un dispositif selon l'invention mettant en oeuvre le processus de dénudage décrit en référence à la figure 1.

Sur les figures 2 et 3 on a représenté en 10 un câble cylindrique à dénuder. Le dispositif de dénudage comprend une tête de dénudage 11, une tête 12 de maintien du câble 10. Les deux têtes 11 et 12 sont disposées sensiblement en regard en sorte de former une paire de mors susceptible d'enserrer avec une certaine pression, réglable, le câble 10.

A cet effet, la tête 12 est solidaire d'un bâti 13 sur lequel est montée la tête 11. Celle-ci peut coulisser en direction de la tête 12 sous l'action d'un moyen schématisé en 14 contraignant la tête de dénudage 11 à presser le câble 10 contre la tête de maintien 12 sous une pression prédéterminée, réglable.

La tête de dénudage 11 comporte deux lames, respectivement de détection 5a et d'incision 5b, montées à l'intérieur d'un palpeur 6 de réglage de la profondeur de pénétration des lames dans la gaine externe du câble 10 et de suivi du contour du câble à dénuder.

Les deux lames 5a,5b sont reliées à un détecteur D comprenant des moyens d'application d'une différence de potentiel appropriée aux deux lames 5a, 5b et de détection d'une continuité électrique par micro-contact entre lesdites lames, via le conducteur du câble 10, porté par le bâti et muni de moyens de signalisation, sonore et/ou lumineuse, d'une continuité électrique par micro-contact et de commande (liaison 15) du moyen d'application de pression 14 en vue de relâcher la pression exercée sur le câble 10 par la tête de dénudage et de ramener celle-ci en arrière.

Une rotation relative (flèche 16) entre le câble 10 et l'ensemble 11 à 15 pour inciser le câble sur un ou plusieurs tours, est obtenue par exemple en maintenant le câble 10, à proximité de la zone d'incision, grâce à un moyen de serrage, tel qu'une buse ou des mors, schématisé en 17 sur la figure 3 et en faisant pivoter ledit ensemble 11 à 15 autour de l'axe du moyen de serrage 17.

On pourrait bien entendu prévoir l'inverse, à savoir rendre stationnaire l'ensemble 11-15 et faire tourner l'ensemble 10,17 autour de son axe.

Le palpeur 6, les lames 5a,5b et la tête de maintien 12 sont conformés de façon à épouser au mieux le profil extérieur du câble 10, lequel profil peut être régulier et circulaire dans le cas des câbles cylindriques, ou irrégulier avec des parties convexes et concaves de courbures diverses.

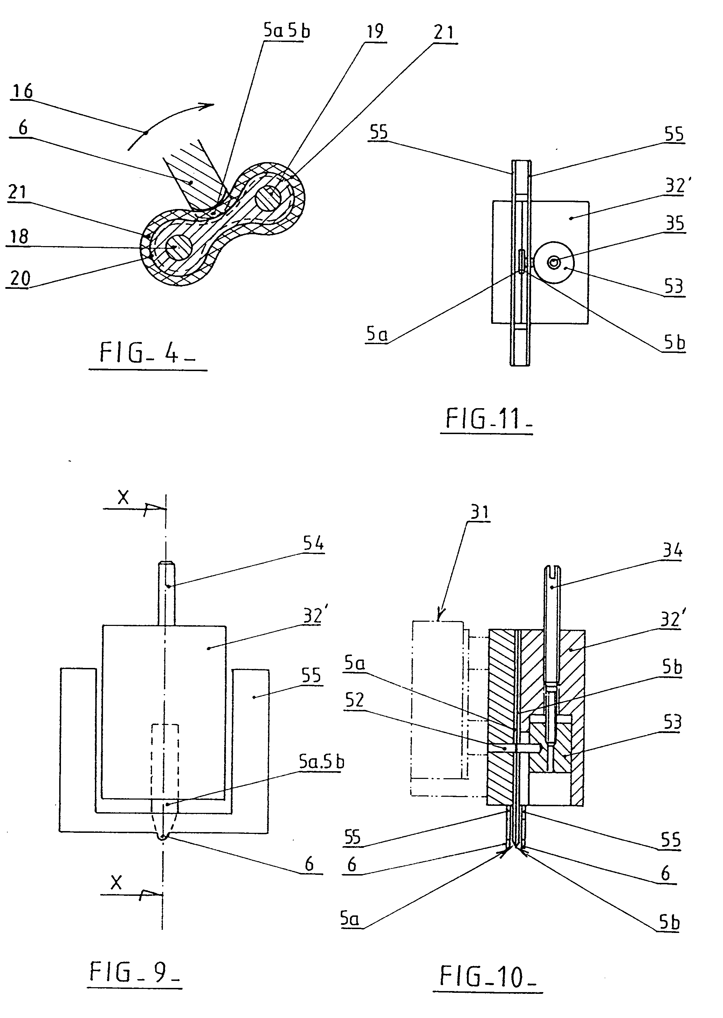

En effet, le principe de dénudage ci-dessus s'applique à des câbles cylindriques, mais également, suivant un avantage particulier de l'invention, à des câbles dont le contour extérieur de la section est quelconque. En particulier, l'invention s'applique au dénudage de câbles torsadés tels que celui illustré par la figure 4.

Le câble de la figure 4 comporte deux conducteurs multibrins 18 et 19, torsadés, entourés d'un blindage commun 20 constitué par exemple d'une tresse de fils fins de cuivre étamé, le blindage étant lui-même enveloppé par une gaine externe 21 par exemple en "Téflon" ou en "Kapton".

Le profil extérieur d'un tel câble comporte des parties convexes et des parties concaves.

La partie coupante des lames 5a,5b ainsi que l'extrémité du palpeur 6 en contact avec la gaine 21 sont conformées de façon à épouser lesdites parties concaves. A cet effet, la largeur de la partie active des lames et le profil de l'arête de coupe sont déterminés en sorte d'avoir des extrémités de lames arrondies en fonction du rayon de courbure minimale des zones concaves des profils externes de câbles susceptibles d'être rencontrés.

L'extrémité active du palpeur 6, et plus précisément des deux parties symétriques flanquant la paire de lames 5a,5b, présente un contour analogue à celui des lames.

La tête de maintien 12 définit un berceau en V 22 de réception du câble. Le profil du V peut être variable pour tenir compte du profil et du diamètre des câbles à dénuder. Le fond du V est configuré de manière à permettre une bonne rotation relative entre la tête 12 et le câble 10 maintenu dans le fond dudit V.

La tête 12 peut être montée, comme la tête de dénudage 11, mobile sur le bâti 13, en direction du câble 10, en synchronisme avec la tête 11.

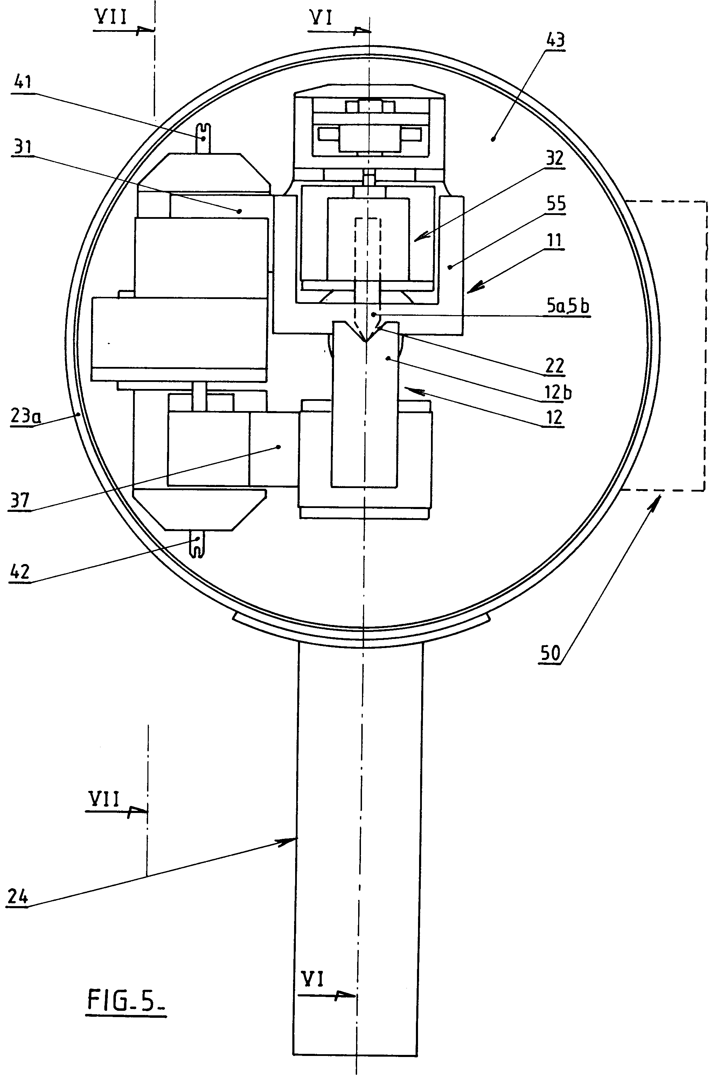

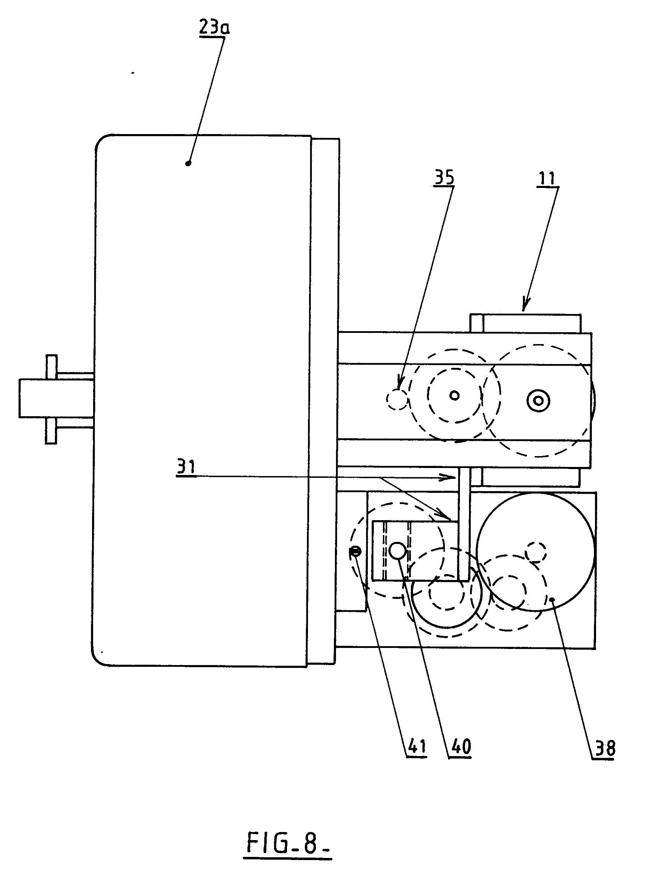

Les figures 5 à 8 représentent un mode de réalisation d'un dispositif de dénudage selon le principe de la figure 2, avec un système d'avance et d'application de pression simultanées et en opposition pour les deux têtes de dénudage 11 et de maintien 12.

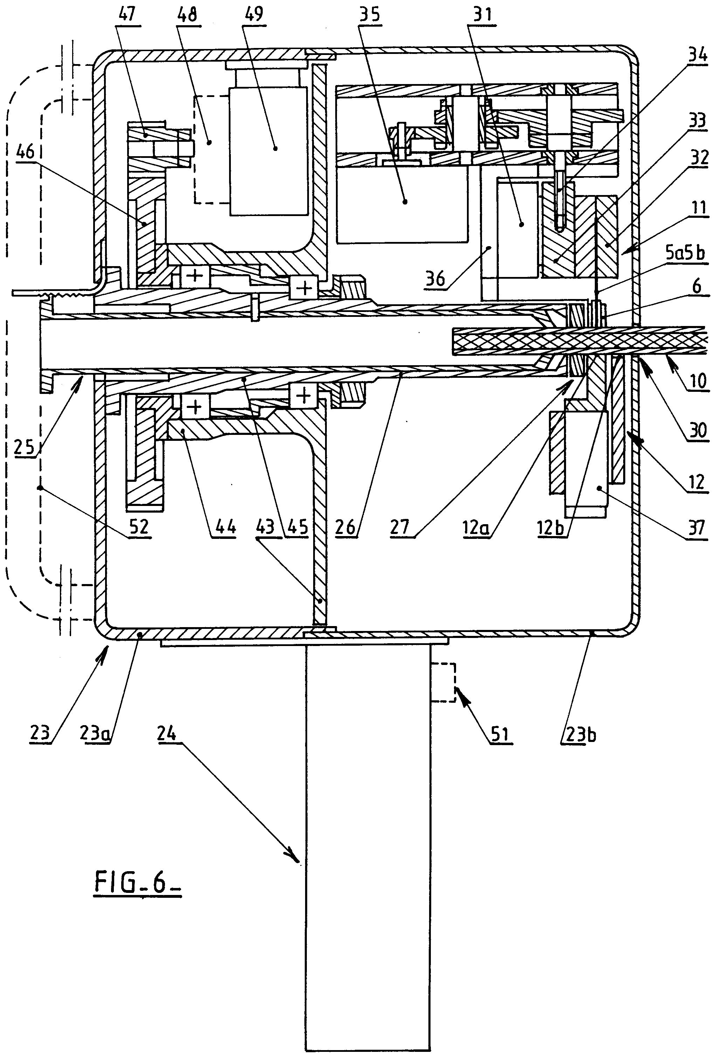

Sur la figure 6, le dispositif est représenté avec un câble 10 engagé entre la tête de dénudage 11 et la tète de maintien 12, alors que sur les figures 5 et 7,8, ledit câble 10 n'est pas représenté.

Le dispositif comporte un boîtier 23 de forme générale cylindrique, en deux parties 23a,23b dont l'une, 23b, est amovible et une poignée 24 de manutention. Sur la figure 5 la partie de boîtier 23b est enlevée.

A l'intérieur du boîtier est disposée, coaxialement, une console tubulaire constituée d'un tube interne 25 et d'un tube externe 26, à l'extrémité desquels est disposée une buse de centrage auto-bloquante 27. L'ensemble forme un dispositif de serrage de câble, dont le principe est bien connu, qui permet de bloquer des câbles de différents diamètres.

Le tube interne 25 peut coulisser axialement dans le tube externe 26 qui est solidaire du boîtier 23a.

Le câble à dénuder 10 est introduit dans la buse 27 par l'intermédiaire d'une ouverture 30 ménagée dans la face frontale plane du boîtier amovible 23b.

La buse 27 se trouve à quelque distance en regard de l'ouverture 30 et c'est dans cet intervalle que le câble 10 sera dénudé au droit d'une partie prise en sandwich entre la tête de dénudage 11 portant les deux lames 5a,5b et la tête 12 de maintien du câble.

La tête de maintien 12 comprend une partie 12a en regard des lames 5a,5b destinée à servir d'appui à celles-ci et une partie 12b, légèrement déportée en direction de l'ouverture 30, munie d'un logement en V 22 destiné à centrer convenablement le câble.

Sur la figure 5 les lames 5a,5b sont représentées en butée contre la partie 12a.

Les deux parties du palpeur 6, entre lesquelles se déplacent les lames 5a,5b, sont solidaires d'une platine-support 31 sur laquelle une cassette 32 porte-lames est montée coulissante radialement afin de régler la position relative, en direction du câble à dénuder, de l'extrémité des lames vis à vis du palpeur 6.

A cet effet, ladite cassette 32 est solidaire d'une pièce 33 montée coulissante radialement sur ladite platine 31 et entraînée par une vis 34 elle-même entraînée à partir d'un moteur électrique 35 solidaire de la platine 31 grâce à une pièce-support 36.

La tête de maintien 12 est solidaire d'une platine-support 37.

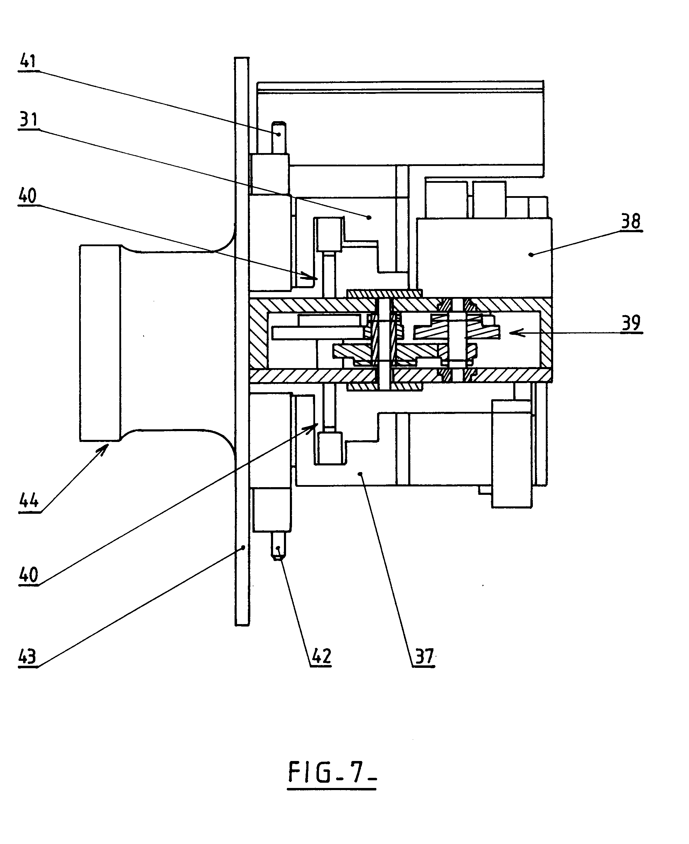

Les deux platines 31 et 37 sont mobiles radialement de façon à s'éloigner ou se rapprocher l'une de l'autre et ce mouvement d'éloignement ou de rapprochement est simultané grâce à un moteur électrique 38 (figure 5 et 7) entraînant, par un jeu d'engrenages 39 et de vis 40, la platine 31 et la platine 37 à la même vitesse. On a représenté en 41 et 42 sur la figure 5 les vis de réglage individuel des pressions radiales des platines 31 et 37 respectivement.

L'ensemble moteur 38, platines 31,37, têtes 11 et 12, moteur 35 est fixé d'un côté d'un flasque circulaire 43 prolongé de l'autre côté par un moyeu 44 monté rotatif sur une partie 45 du tube 26 de la console centrale.

Le moyeu 44 est solidaire à son extrémité libre d'une roue dentée 46 en prise avec un pignon 47 entraîné, via un réducteur 48, par un moteur électrique 49 fixé au boîtier 23a.

On a symbolisé en 50 sur la figure 5 un boîtier de commande et de réglage des divers mouvements ou fonctions du dispositif.

Dans ce boîtier sont logés notamment le détecteur (non représenté sur les figures 5 à 8) d'une éventuelle continuité électrique par micro-contact entre les lames 5a,5b, les commandes de marche-arrêt des moteurs 35 et 38, des moyens informatisés de réglage des divers paramètres (fonctions du type de câble à dénuder), à savoir le positionnement des lames 5a,5b par rapport au palpeur 6 (profondeur maximale d'incision), la pression à exercer sur le câble par les têtes 11 et 12 en cours de dénudage, la vitesse de rotation (moteur 49) de l'équipage 11-12 autour du câble 10 et le nombre de rotations complètes de cet équipage, et de commande automatique du processus de dénudage, une fois affichés les divers paramètres.

De tels moyens informatisés sont classiques et comprennent un micro-processeur programmable, des organes d'entrée-sortie, des organes de visualisation ou signalisation. Ils sont reliés aux divers organes commandés ou contrôlés par des liaisons non représentées sur les dessins ainsi qu'à une source de courant électrique qui peut être une ou plusieurs piles (non représentées) alimentant également les moteurs 35,38 et 49.

Le boîtier 50 est agencé à l'endroit le plus approprié sur la partie fixe 23a du boîtier qui peut être configurée à cet effet.

Il est à noter que le boîtier 50 ainsi que la ou les sources d'énergie pourraient être installés à distance du dispositif de dénudage et reliés à ce dernier par un cordon souple.

La poignée 24 peut être équipée d'un bouton (comme symbolisé en 51 sur la figure 6) de commande de mise en marche du moteur 49 d'entraînement en rotation de l'équipage 11-12 et d'arrêt de celui-ci, si l'arrêt n'est pas programmé.

Une poignée auxiliaire telle que celle symbolisée en 52 sur la figure 6, peut être prévue à l'arrière du dispositif.

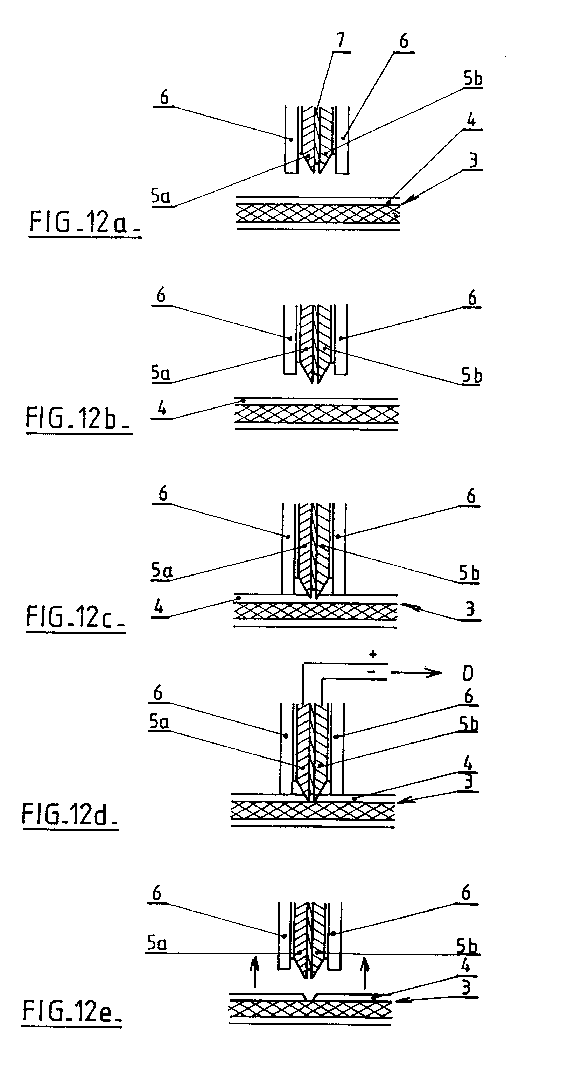

Les figures 12a à 12e illustrent différentes positions relatives des lames 5a,5b, du palpeur 6 et du câble à dénuder 10.

La figure 12a représente une position de repos à la fois du palpeur 6, éloigné au maximum du câble en position de dénudage dans la buse 29 (non représentée) et des lames 5a,5b complètement rentrées dans le palpeur 6.

La figure 12b représente les lames 5a,5b sorties du palpeur 6 d'une distance par exemple de 85 micromètres constituant la profondeur de pénétration des lames dans la gaine externe 4 du câble. Le réglage de cette profondeur s'effectue grâce au moteur 35.

La figure 12c représente le palpeur 6 en appui contre le câble 10 et les lames 5a,5b en pénétration dans la gaine externe 4 d'une distance par exemple de 85 micromètres. Cette position de coupe est obtenue grâce au moteur 38. La pression exercée conjointement sur le câble 10 par le palpeur 6 et la tête de maintien 12 est réglable et peut être maintenue constante au cours de la rotation de l'équipage 11-12 autour du câble, quel que soit le profil extérieur de celui-ci.

C'est ainsi que dans le cas du câble de la figure 4, les têtes 11 et 12 vont se rapprocher l'une de l'autre lorsqu'au cours de leur rotation le palpeur 6 va épouser les parties concaves du profil externe du câble et, au contraire, s'éloigner au droit des parties convexes, tout en maintenant une même valeur de pression sur le câble.

La figure 12d illustre une position de défaut dans laquelle les lames 5a,5b traversent, par exemple du fait d'un affichage d'une profondeur de pénétration trop importante, ou d'un amincissement localisé de la gaine externe, toute l'épaisseur de la gaine 4 et viennent en contact avec le blindage conducteur 3 qui créé aussitôt une continuité électrique par micro-contact entre les deux lames. La détection de cette continuité électrique par micro-contact entraîne automatiquement et instantanément le retrait des têtes 11 et 12 grâce au détecteur D incorporé dans le boîtier 50 de commande et contrôle et agissant sur le moteur 38.

La figure 12e illustre un tel retrait avec remise automatique des organes 5a,5b,6 dans la position de repos de la figure 12a.

Généralement, dans une configuration de défaut telle que celle illustrée par la figure 12d, l'oxydation en surface du blindage métallique 3 est suffisante pour engendrer un micro-contact entre les lames 5a, 5b détectable par le détecteur de continuité électrique D relié aux lames.

De toutes façons, qu'il y ait ou non oxydation en surface, du fait que le détecteur D soit sensible et réagisse à un simple micro-contact, l'éventuel contact physique entre les lames 5a,5b et le blindage 3 est si léger et furtif qu'il n'a aucune conséquence sur l'intégrité de la surface du blindage.

Lorsqu'un défaut de dénudage est détecté, un simple réglage, en baisse, de la profondeur de pénétration des lames 5a,5b éliminera, pour le même type de câble, toute survenance d'un nouveau défaut de dénudage.

Le dispositif de l'invention peut donc garantir non seulement l'absence de mise au rebut de câbles, mal dénudés, mais également une cadence de dénudage bien supérieure à celles que peuvent offrir les techniques connues de dénudage et, ce, avec une gamme de types de câbles différents pratiquement sans limite.

De préférence, les lames 5a,5b ne sont affutées que d'un seul côté, l'arête de coupe se trouvant sur le bord intérieur afin que les deux empreintes de coupe, séparées par une distance de l'ordre du dixième de millimètre par exemple, arrivent presque à se confondre.

Par ailleurs, il n'est pas indispensable que la gaine externe 4 du câble soit incisée sur toute son épaisseur pour son enlèvement, ce qui permet d'afficher une profondeur de pénétration des lames 5a,5b évitant normalement tout contact de ces dernières avec le blindage sous-jacent.

L'incision de la gaine externe se fait avantageusement par approche progressive sur au maximum trois tours, par exemple.

Les lames de la cassette 32 sont toutes les deux fixes, ou bien, suivant une variante illustrée par les figures 9 à 11, la lame de détection (5a) est fixe sur le bloc porte-lame de la cassette (32'), cependant que la lame d'incision (5b) est montée coulissante, radialement au câble à dénuder, à l'aide d'un pion 52 solidaire d'un dé coulissant 53 actionné par une vis 54 à commande manuelle.

Une telle vis 54 permet de régler les arêtes de coupe des lames 5a,5b au même niveau, ce qui est nécessaire si l'on veut éviter de manière absolue toute atteinte au blindage sous-jacent.

En effet, la détection d'un micro-contact entre les lames 5a,5b dépendant directement de l'intervalle cumulé entre, d'une part, le blindage sous-jacent et l'une des lames (5a,5b) et, d'autre part, le blindage et l'autre lame, si les deux lames ne sont pas au même niveau, il y a un risque que la détection d'un micro-contact survienne alors que la lame la plus avancée le soit trop et porte ainsi atteinte à l'intégrité du blindage.

Sur les figures 5,6 et 9 à 11 on a représenté en 55 deux pièces en forme de U accolées tout en étant distantes l'une de l'autre et définissant par deux saillies en regard les organes du palpeur 6. Les pièces 55 sont solidaires de la platine 31.

La cassette 32 des figures 5 et 6 est amovible et peut être remplacée par la cassette 32′ ou toute autre cassette portant une paire de lames d'une configuration et d'un dimensionnement différents.

Les lames 5a,5b peuvent être remplacées par tout élément, fixe ou mobile par rapport au palpeur 6, susceptible de créer dans la gaine externe du câble à dénuder une solution de continuité partielle ou totale, par incision, entaillage avec enlèvement ou non de matière, enlèvement de matière par fusion, quelle que soit la technologie utilisée.

Le dispositif décrit ci-dessus peut être utilisé pour réaliser des fenêtres sur un câble, c'est-à-dire l'enlèvement d'un tronçon de la gaine externe en dehors des extrémités du câble.

Comme il a été dit plus haut, l'invention s'applique plus particulièrement au dénudage de câbles blindés surgainés, ou de conducteurs électriques à âme de configuration quelconque, mais peut également s'appliquer à l'incision, au sens large défini au début de la présente description, d'un élément isolant en forme de feuille recouvrant une surface conductrice et adhérant à celle-ci, en vue du dénudage de cette surface, par enlèvement, pelage ou autre, de la découpe réalisée dans ledit élément de recouvrement.

L'invention n'est évidemment pas limitée aux modes de réalisation représentés et décrits ci-dessus mais en couvre au contraire toutes les variantes notamment en ce qui concerne les nature, forme et dimensions des organes de détection et d'incision (5a,5b) ou analogue, des organes de palpage 6 et des organes de maintien (tête 12) coopérant avec les organes d'incision.

Enfin, l'invention s'applique à l'incision d'un élément, feuille, gaine ou analogue, en un matériau quelconque, pourvu qu'il ne soit pas conducteur de l'électricité, en vue du dénudage d'une surface sous-jacente en un matériau également quelconque, pourvu qu'il soit, lui, conducteur de l'électricité.

Par ailleurs, les moteurs électriques 35, 38 et 49 peuvent être remplacés par tous moyens moteurs de diverses technologies.

## Revendications

1. Dispositif de dénudage de la surface d'un élément (3,20) en matériau conducteur de l'électricité recouvert d'un élément (4,21) protecteur ou isolant tel qu'une pellicule, gaine ou analogue, comprenant un organe d'incision (5b) en un matériau conducteur de l'électricité, des moyens (11 à 15) d'application et déplacement dudit organe d'incision (5b) sur ledit élément protecteur et/ou isolant (4,21), caractérisé en ce qu'il comporte, en outre, un organe de détection (5a) en un matériau conducteur de l'électricité, lesdits organes d'incision (5b) et de détection (5a) étant disposés côte à côte et à faible distance l'un de l'autre tout en étant isolés électriquement l'un de l'autre et déplacés simultanément par lesdits moyens (11 à 15) d'application et déplacement desdits organes (5a,5b) sur ledit élément protecteur et/ou isolant, ledit organe de détection (5a) étant, à cet effet, conformé en organe d'incision et des moyens (D) pour appliquer auxdits organes (5a,5b) une différence de potentiel électrique et détecter une continuité électrique établie par micro-contact entre les deux organes susdits.

2. Dispositif suivant la revendication 1, caractérisé en ce que lesdits moyens d'application et déplacement des organes de détection (5a) et d'incision (5b) comportent, en outre, des moyens (31,37,38,40,41) propres à appliquer lesdits organes (5a,5b) sur ledit élément de recouvrement (4,21) avec une pression prédéter-minée, réglable.

3. Dispositif suivant la revendication 2, caractérisée en ce que lesdits moyens (31,37,38,40,41) d'application d'une pression prédéterminée, réglable, sont munis de moyens propres à réduire ou supprimer la pression d'application lors de la détection, par lesdits moyens d'application et détection (D), d'une continuité électrique par micro-contact entre lesdits organes de détection (5a) et d'incision (5b).

4. Dispositif suivant l'une des revendications 1 à 3, plus particulièrement destiné au dénudage de câbles blindés surgainés, caractérisé en ce qu'il est constitué d'un moyen (11) de support commun des deux organes de détection (5a) et d'incision (5b), d'un moyen (12) de maintien du câble à dénuder (10), disposé sensiblement en regard des deux organes susdits (5a,5b) et de façon à recevoir entre lesdits moyens, de support (11) et de maintien (12) respectivement, ledit câble, d'un bâti (13) portant lesdits moyens dont l'un au moins est monté coulissant en direction de l'autre, de moyens (14) propres à exercer sur le ou chaque moyen monté coulissant, en direction de l'autre, une force constante, réglable, et de moyens propres à effectuer un mouvement relatif de rotation (16), sur au moins un tour, entre le câble à dénuder (10) et l'ensemble formé par lesdits moyens (11,12) de support et de maintien.

5. Dispositif suivant la revendication 4, caractérisé en ce qu'aux organes de détection (5a) et d'incision (5b) est associé un palpeur (6), réglable, susceptible de venir en contact avec la périphérie du câble à dénuder (10) afin de limiter la profondeur de pénétration desdits organes (5a, 5b) et de servir de guide lors de la rotation relative entre le câble et lesdits organes (5a, 5b).

6. Dispositif suivant la revendication 4 ou 5, caractérisé en ce que les moyens (14) d'application de ladite force constante, réglable, sont reliés auxdits moyens (D) pour appliquer auxdits organes (5a,5b) une différence de potentiel électrique et détecter une continuité électrique par micro-contact entre lesdits organes (5a,5b), en sorte de supprimer ou réduire l'application de ladite force en cas de détection d'une continuité électrique par micro-contact.

7. Dispositif suivant la revendication 4 ou 5, caractérisé en ce que les moyens (14) d'application de ladite force constante, réglable, sont reliés auxdits moyens (D) pour appliquer auxdits organes (5a,5b) une différence de potentiel électrique et détecter une continuité électrique par micro-contact entre lesdits organes (5a,5b), en sorte de commander l'arrêt du dénudage et l'éloignement desdits organes (5a,5b) par rapport au câble, dès la détection par lesdits moyens (D) d'une continuité électrique par micro-contact.

8. Dispositif suivant l'une des revendications 4 à 7, caractérisé en ce que les organes de détection (5a) et d'incision (5b) sont des lames minces dont les arêtes de coupe sont parallèles et arrondies.

9. Dispositif suivant les revendications 5 et 8, caractérisé en ce que le palpeur (6) comporte deux parties de même conformation que les extrémités actives desdits organes de détection (5a) et d'incision (5b) et disposées de part et d'autre de ces derniers.

10. Dispositif suivant l'une des revendications 4 à 9, caractérisé en ce que les deux organes de détection (5a) et d'incision (5b) sont montés sur un porte-lame ou cassette (32) amovible, l'un des organes (5a ou 5b) étant fixe et, l'autre (5b ou 5a), monté mobile en direction du câble à dénuder (10).

11. Dispositif suivant l'une des revendications 4 à 10, caractérisé en ce que les moyens (11) de support des organes de détection et d'incision (5a,5b) et les moyens (12) de maintien du câble à dénuder (10) sont montés rotatifs autour de l'axe du câble, des moyens (25 à 27) étant prévus pour immobiliser le câble en cours de dénudage.

12. Dispositif suivant la revendication 11, caractérisé en ce que lesdits moyens (25 à 27) d'immobilisation du câble à dénuder (10) sont fixés sur un bâti portatif (23a,24) et les moyens (11) de support des organes de détection et d'incision (5a,5b) ainsi que les moyens (12) de maintien du câble sont solidaires d'un moyeu (44) monté à rotation coaxialement auxdits moyens d'immobilisation (25 à 27), ledit moyeu (44) étant entraîné à partir d'un moteur (49) solidaire dudit bâti (23a, 24).

13. Dispositif suivant l'une des revendications 4 à 12, caractérisé en ce que les moyens (12) de maintien du câble à dénuder (10) comprennent une partie (12a) disposée en regard des organes de détection et d'incision (5a,5b) et une partie (12b) déportée axialement au câble et munie d'un logement en forme de V (22) de réception du câble.

14. Dispositif suivant l'une des revendications 4 à 13, caractérisé en ce qu'il comporte un système de commande et contrôle par micro-processeur programmable des divers éléments mobiles, relié auxdits moyens (D) pour appliquer auxdits organes (5a,5b) une différence de potentiel électrique et détecter une continuité électrique par micro-contact et susceptible d'automatiser le processus de dénudage, après affichage des divers paramètres tels que profondeur de pénétration des organes de détection et d'incision (5a,5b), pression exercée sur le câble (10) par lesdits moyens de support (11) et lesdits moyens de maintien (12), vitesse de rotation relative (16) entre le câble et lesdits moyens (11,12), nombre de tours de rotation et de supprimer ou réduire ladite pression, éloigner du câble lesdits moyens (11,12) et arrêter le dispositif en cas de détection d'une continuité électrique par micro-contact entre les deux organes de détection (5a) et d'incision (5b) par lesdits moyens (D).
